# EUROPÄISCHE PATENTANMELDUNG

(11) **EP 1 870 424 A1**
(43) Veröffentlichungstag der Anmeldung: **26.12.2007**
(21) Anmeldenummer: 07011027.5
(22) Anmeldetag: 05.06.2007
(51) Int. Cl.: C08G 18/28, C08J 3/03

(54) **Neue Polyurethane und ihre Verwendung zur Verdickung wässriger Systeme**

(30) Priorität: 14.06.2006 DE 102006027490
(71) Anmelder: Borchers GmbH, 40764 Langenfeld (DE)
(72) Erfinder: Sauer, Frank, Dr., 40764 Langenfeld (DE); Helker, Dietmar, 40764 Langenfeld (DE); Sonntag, Anja, 40764 Langenfeld (DE); Menzel, Claudia, 40723 Hilden (DE); Manshausen, Peter, Dr., 50767 Köln (DE)
(74) Vertreter: Eisenführ, Speiser & Partner

(57) **Zusammenfassung**

Die Erfindung betrifft neue, als Verdickungsmittel für wässrige Systeme geeignete hydrophil/hydrophobe wasserlösliche oder -dispergierbare Polyurethane, die sich durch eine besonders effiziente Verdickungswirkung im Low-Shear-Bereich auszeichnen, sowie ihre Verwendung zur Verdickung wässriger Systeme.

## Beschreibung

Die Erfindung betrifft neue, als Verdickungsmittel für wässrige Systeme geeignete hydrophil/hydrophobe wasserlösliche oder -dispergierbare Polyurethane, die sich durch eine besonders effiziente Verdickungswirkung im Low-Shear-Bereich auszeichnen, sowie ihre Verwendung zur Verdickung wässriger Systeme.

Verdickungsmittel auf Polyurethanbasis für wässrige Systeme werden in zahlreichen Veröffentlichungen beschrieben (vgl. z.B. DE-A 1 444 243, DE-A 3 630 319, EP-A 0 031 777, EP-A 0 307 775, EP-A 0 495 373, US-A 4 079 028, US-A 4 155 892, US-A 4 499 233 oder US-A 5 023 309). Polyurethanverdicker sind weiter bekannt aus EP-A-618 243, 725 097, 839 877 und 1 241 200.

Diesen Verdickungsmitteln des Standes der Technik gemeinsam ist das gleichzeitige Vorliegen von (i) hydrophilen Segmenten in einer Menge von mindestens 50 Gew.-%, (ii) hydrophoben Segmenten in einer Menge von maximal 30 Gew.-% und (iii) Urethangruppen. Unter "hydrophilen Segmenten" sind hierbei insbesondere Polyetherketten mit mindestens 5 Kettengliedern zu verstehen, deren Alkylenoxid-Einheiten zumindest zu 50 Mol-% aus Ethylenoxideinheiten bestehen. Unter "hydrophoben Segmenten" sind hierbei insbesondere Kohlenwasserstoff-Segmente zu verstehen, die vorzugsweise endständig eingebaut sind und die mindestens 6 Kohlenstoffatome aufweisen.

Auch die nachstehend näher beschriebenen erfindungsgemäßen Verdickungsmittel entsprechen vorzugsweise dieser Definition.

Diese Polyurethanverdicker eignen sich als Hilfsmittel für die Einstellung von rheologischen Eigenschaften von wässrigen Systemen wie z.B. Auto- und Industrielacken, Putz- und Anstrichfarben, Druck- und Textilfarben, Pigmentdruckpasten, pharmazeutischen und kosmetischen Zubereitungen, Pflanzenschutzformutierungen, Waschmittelzubereitungen oder Füllstoff- und Klebstoffdispersionen.

Obwohl die bekannten Polyurethanverdicker eine breite Anwendung finden, weisen sie für viele Einsatzbereiche eine zu geringe Verdickungswirkung im Low-Shear-Bereich auf. Dies hat zur Folge, dass sie entweder in vergleichsweise hohen Konzentrationen eingesetzt werden müssen oder aber dass andere Maßnahmen zur Erhöhung der Viskosität ergriffen werden müssen, wie z.B. die Erhöhung der Pigment- bzw. Feststoffkonzehtration. In solchen Fällen kann es jedoch zu unerwünschten Veränderungen der anwendungstechnischen Eigenschaften, z.B. des Verlaufs, des Aushärtungsverhaltens, des Glanzes oder des Deckvermögens, der hergestellten Farben oder anderen Zubereitungen kommen.

Eine andere Möglichkeit, die Low-Shear-Viskosität effizient zu erhöhen, besteht darin, Verdicker auf Basis von Cellulose oder Polyacrylaten einzusetzen. Diese Produkte haben aber andere schwerwiegende Nachteile, wie z.B. verminderte Verträglichkeit in der Beschichtung, schlechte Wasserbeständigkeit, Anfälligkeit gegenüber Mikroorganismen oder schlechterer Verlauf und Glanz.

Die Aufgabe der vorliegenden Erfindung bestand also darin, verbesserte Verdickungsmittel für wässrige Systeme bei der Anwendung im Low-Shear-Bereich zu entwickeln, die eine ähnlich hohe rheologische Effizienz wie die o. g. Celluloseverbindungen oder Polyacrylate aufweisen, die aber nicht die genannten Nachteile zeigen.

Diese Aufgabe konnte nun überraschend mit der Bereitstellung der nachstehend näher beschriebenen erfindungsgemäßen hydrophil/hydrophoben wasserlöslichen oder - dispergierbaren Polyurethane gelöst werden. Erfindungswesentlich ist hierbei der Einsatz von "hydrophoben Segmenten", insbesondere von Kohlenwasserstoff-Segmenten mit mindestens 6 Kohlenstoffatomen und mit mindestens 1 ungesättigtem Strukturelement (Kohlenstoff-Kohlenstoff Doppelbindung).

Gegenstand der Erfindung sind wasserlösliche oder wasserdispergierbare Polyurethane, hergestellt unter Einhaltung eines NCO/OH-Äquivalentverhältnisses von 0,5 : 1 bis 1,2 : 1 in ein- oder mehrstufig erfolgter Reaktion aus
A) mindestens einem Polyetherpolyol der mittleren Funktionalität ≥ 1,2,
B) mindestens einem (cyclo)aliphatischen und/oder aromatischen Diisocyanat,
C) mindestens einem linearen oder verzweigten, (cyclo)aliphatischen Monoalkohol mit 6 bis 34 Kohlenstoffatomen, der mindestens ein ungesättigtes Strukturelement (Kohlenstoff-Kohlenstoff Doppelbindung) als integralen Bestandteil aufweist oder mindestens einem linearen oder verzweigten, (cyclo)aliphatischen Monoalkoholalkoxylat mit 6 bis 34 Kohlenstoffatomen, das mindestens ein ungesättigtes Strukturelement (Kohlenstoff-Kohlenstoff Doppelbindung) als integralen Bestandteil aufweist und das um mindestens eine Ethylenoxid (EO)- oder Propylenoxid (PO)-Einheit verlängert wurde oder aromatische Monoalkohole und/oder aromatische Monoalkoholalkoxylate mit 6 bis 34 Kohlenstoffatomen, oder Mischungen dieser Komponenten,
D) gegebenenfalls einer weiteren linearen oder verzweigten monofunktionellen Komponente mit einem Kohlenstoffrest von 6 bis 34 Kohlenstoffatomen., die mit Isocyanaten reagieren kann und die vorzugsweise aus einem (cyclo)aliphatischen und/oder aromatischen Monoalkohol, einem (cyclo)aliphatischen und/oder aromatischen Monoalkoholalkoxylat oder einem (cyclo)aliphatischen und/oder aromatischen Amin besteht. Die Komponente D) ist vorzugsweise gesättigt.

Ein weiterer Gegenstand der Erfindung ist ein Verfahren zur Herstellung wasserlöslicher oder wasserdispergierbarer Polyurethane, hergestellt unter Einhaltung eines NCO/OH-Äquivalentverhältnisses von 0,5 : 1 bis 1,2 : 1 in ein- oder mehrstufig erfolgter Reaktion aus
A) mindestens einem Polyetherpolyol der mittleren Funktionalität ≥ 1,2,
B) mindestens einem (cyclo)aliphatischen und/oder aromatischen Diisocyanat,
C) mindestens einem linearen oder verzweigten, (cyclo)aliphatischen Monoalkohol mit 6 bis 34 Kohlenstoffatomen, der mindestens ein ungesättigtes Strukturelement (Kohlenstoff-Kohlenstoff Doppelbindung) als integralen Bestandteil aufweist oder mindestens einem linearen oder verzweigten, (cyclo)aliphatischen Monoalkoholalkoxylat mit 6 bis 34 Kohlenstoffatomen, das mindestens ein ungesättigtes Strukturelement (Kohlenstoff-Kohlenstoff Doppelbindung) als integralen Bestandteil aufweist und das um mindestens eine Ethylenoxid (EO)- oder Propylenoxid (PO)-Einheit verlängert wurde oder aromatische Monoalkohole und/oder aromatische Monoalkoholkoxylate mit 6 bis 34 Kohlenstoffatomen, oder Mischungen dieser beiden Komponenten,
D) gegebenenfalls einer weiteren linearen oder verzweigten monofunktionellen Komponente mit einem Kohlenstoffrest von 6 bis 34 Kohlenstoffatomen., die mit Isocyanaten kovalent verknüpft werden kann und die vorzugsweise aus einem (cyclo)aliphatischen und/oder aromatischen Monoalkohol, einem (cyclo)-aliphatischen und/oder aromatischen Monoalkoholalkoxylat oder einem (cyclo)-aliphatischen und/oder aromatischen Amin besteht.

Gegenstand der Erfindung ist auch die Verwendung der erfindungsgemäßen Polyurethane zur Verdickung wässriger Systeme.

Die Polyetherpolyolkomponente A) besteht vorzugsweise aus einer Verbindung der allgemeinen Formel (I)

R₁ [-O-(A)ₓ-H]_{y} (I),

wobei
- R₁: für einen aliphatischen oder araliphatischen, gegebenenfalls Ethersauerstoffatome aufweisenden, Kohlenwasserstoffrest mit 2 bis 36 Kohlenstoffatomen steht,
- A: für Ethylenoxid- und/oder Propylenoxid-Reste mit der Maßgabe, dass mindestens 50 Mol-%, vorzugsweise 70 Mol-% und besonders bevorzugt 100 Mol-%, der Reste für Ethylenoxidreste stehen,
- x: für eine Zahl von 20 bis 300 steht und
- y: eine Zahl von 1 bis 6, vorzugsweise 2 bis 6, bedeutet.

Die mittlere Funktionalität der Komponente A ist vorzugsweise gleich oder größer als 2, in einer weiteren Ausführungsform ca. 2 und in einer weiteren 3 bis 4.

Die Komponente B) besteht vorzugsweise aus mindestens einem Diisocyanat der allgemeinen Formel (II)

OCN - R₂ - NCO (II),

worin
- R₂: für einen gegebenenfalls inerte Substituenten aufweisenden aliphatischen, araliphatischen, cycloaliphatischen oder aromatischen Rest mit 4 bis 22 Kohlenstoffatomen steht.

Beispiele für Diisocyanate der Komponenten B) sind aliphatische Diisocyanate wie z.B. 1,4-Butandiisocyanat oder 1,6-Hexandiisocyanat; cycloaliphatische Diisocyanate wie z.B. 1-Isocyanato-3,3,5-trimethyl-5-isocyanatomethylcyclohexan (Isophorondiisocyanat), 1,3- und 1,4-Cyclohexandiisocyanat, 4,4'-Diisocyanatodicyclohexylmethan usw. sowie aromatische Diisocyanate wie z.B. 2,4-Diisocyanatotoluol und 4,4'-Diisocyanatodiphenylmethan.

Die Komponente C) besteht vorzugsweise aus mindestens einer, eine Hydroxylgruppe enthaltenen, Komponente der allgemeinen Formel (III)

R₃-O-(A)ₙ-H (III),

worin
- R₃: für einen linearen oder verzweigten aliphatischen, araliphatischen, cycloaliphatischen oder aromatischen Rest mit 6 bis 34 Kohlenstoffatomen steht, der mindestens ein ungesättigtes Strukturelement (Kohlenstoff-Kohlenstoff Doppelbindung) als integralen Bestandteil aufweist.
- A: für Ethylenoxid- und/oder Propylenoxid-Reste steht.
- n: eine Zahl von 0 bis 1000 bedeutet.

Beispiele für die Komponente C) sind ungesättigte (cyclo)aliphatische Alkohole wie z.B.1-Octenol, 2-Ethylhexenol, 1-Nonenol, 1-Decenol, 1-Dodecenol, 1-Tetradecenol, 1-Hexadecenol, 1-Octadecenol, 1-Docosenol bzw. deren alkoxylierte Varianten, oder aromatische Alkohole wie z.B. Arylpolyglycolether, 2-Hydroxybiphenylether bzw. 4-Hydroxybiphenylether oder Retinol. Bevorzugt sind ungesättigte oder aromatische Monoalkohole mit 10 bis 24 Kohlenstoffatomen, besonders bevorzugt sind ungesättigte oder aromatische Monoalkohole mit 14 bis 20 Kohlenstoffatomen. Selbstverständlich können auch Gemische der beispielhaft genannten Komponenten C) verwendet werden.

Die optional einsetzbare monofunktionelle Komponente D) besteht vorzugsweise aus mindestens einer Komponente der allgemeinen Formel (IV) oder aus mindestens einer Komponente der allgemeinen Formel (V)

R₄-O-(A)ₚ-H (IV)

R₄-X (V),

oder aber auch Mischungen der beiden genannten Komponenten,
worin
- R₄: für einen linearen oder verzweigten aliphatischen, araliphatischen, cycloaliphatischen oder aromatischen Rest mit 6 bis 34 Kohlenstoffatomen steht.
- A: für Ethylenoxid- und/oder Propylenoxid-Reste steht.
- p: eine Zahl von 1 bis 20 bedeutet.
- X: für eine funktionelle Gruppe steht, die mit Isocyanaten kovalent verknüpft werden kann und die vorzugsweise aus einer Hydroxylgruppe (-OH) oder einer Amingruppe (-NH₂) besteht.

Beispiele für die Komponente D) sind (cyclo)aliphatische Alkohole wie z.B.1-Octanol, 2-Ethylhexanol, 1-Nonanol, 1-Decanol, 1-Dodecanol, 1-Tetradecanol, 1-Hexadecanol, 1-Octadecanol, 1-Docosanol bzw. deren alkoxylierte Varianten oder aber auch 1-Octylamin, 1-Decylamin, 1-Dodecylamin, Ditridecylamin (Isomerengemisch), etc.. Bevorzugt sind Monoalkohole mit 8 bis 24 Kohlenstoffatomen, besonders bevorzugt sind Monoalkohole mit 10 bis 18 Kohlenstoffatomen. Selbstverständlich können auch Gemische der beispielhaft genannten Komponenten D) verwendet werden.

Die Herstellung der erfindungsgemäßen Polyurethane erfolgt ein- oder mehrstufig. Unter einer einstufigen Reaktion ist hierbei die Umsetzung der Gesamtmenge der Komponente A) mit der Gesamtmenge der Komponenten B), C) und gegebenenfalls D) zu verstehen. Eine mehrstufige Reaktion besteht beispielsweise in der Umsetzung des Polyethers A) mit dem Diisocyanat B) und einer anschließenden Umsetzung dieser Vorstufe mit der Gesamtmenge der Komponente C) und gegebenenfalls der Komponente D). Eine mehrstufige Reaktion kann ebenfalls bzw. zusätzlich aus einer separaten Umsetzung eines Teils oder der Gesamtmenge der Komponenten C) mit einem molaren Überschuss an Diisocyanatkomponente B) und anschließende Umsetzung des dabei resultierenden NCO-Prepolymeren mit der Komponente A) und gegebenenfalls der Komponente D) bestehen. Die Reihenfolge der Umsetzungen ist hierbei weitgehend ohne Bedeutung, es muss aber durch die Auswahl der Einatzmengen der Komponenten A) bis C) und gegebenenfalls D) nur gewährleistet sein, dass ein Polymerisationsprodukt gemäß der oben angegebenen Definition entstehen kann.

Bei den auf diese Weise hergestellten erfindungsgemäßen Polyurethanen handelt es sich im Allgemeinen um farblose bis gelbliche Wachse bzw. hochviskose Polymere mit Erweichungspunkten bzw. -bereichen innerhalb des Temperaturbereichs von 10 bis 100°C. Für den späteren Einsatz ist es oftmals vorteilhaft, die erfindungsgemäßen Polyurethane mit Zusätzen, wie z.B. Formulierungsmitteln, Lösungsmitteln, Wasser, Emulgatoren oder Stabilisatoren zu flüssigen Formulierungen zu vermischen.

Die erfindungsgemäßen Polyurethane eignen sich zur Verdickung von wässrigen bzw. überwiegend wässrigen Systemen wie Lacken, Farben, Leder- und Papierhilfsmittel, Zubereitungen für die Erdölförderung, Zubereitungen von Waschmitteln, Klebstoffen, Wachsen für Polituren, Formulierungen für pharmazeutische und veterinäre Zwecke, Pflanzenschutzzubereitungen, kosmetische Artikel usw. Auch das Wasser selbst kann mit den erfindungsgemäßen Polyurethanverdickern angedickt werden, um dann gegebenenfalls mit weiteren Zusätzen versetzt zu werden oder selbst zu wässrigen Zubereitungen zugesetzt zu werden. Die erfindungsgemäßen Verdicker könne auch in Gemischen mit anderen Verdickungsmitteln eingesetzt werden wie z.B. solchen auf Basis von Polyurethanen, Polyacrylaten, Cellulosederivaten oder anorganischen Verdickungsmitteln. In einer bevorzugten Ausführungsform enthalten die erfindungsgemäßen Systeme 5 bis 70, insbesondere 10 bis 50 % Wasser.

Beispiele für wässrige Systeme, die erfindungsgemäß verdickt werden können, sind wässrige Polyacrylatdispersionen, wässrige Dispersionen von Mischpolymerisaten olefinisch ungesättigter Monomerer, wässrige Polyvinylacetatdispersionen, wässrige Polyurethandispersionen, wässrige Polyesterdispersionen und insbesondere gebrauchsfertige Zubereitungen der oben bereits angesprochenen Art auf Basis derartiger Dispersionen oder Mischungen derartiger Dispersionen.

Die erfindungsgemäßen Verdickungsmittel können selbstverständlich in Substanz, vorzugsweise als Granulat oder gegebenenfalls Pulver, eingesetzt werden. Besonders bevorzugte Verwendung finden jedoch flüssige Formulierungen, die neben den erfindungsgemäßen Polyurethanen Wasser, Lösungsmittel wie Butylglykol, Butyldiglykol, Butyltriglykol, Isopropanol, Methoxypropylacetat, Ethylen- und/oder Propylenglykol, (Poly)ethylen- und/oder (Poly)propylenglykolmonoalkylether, nichtionische Emulgatoren, Tenside und/oder gegebenenfalls weitere Zusatzstoffe enthalten, weil dadurch die Einarbeitung der erfindungsgemäßen Verdickungsmittel in wässrige bzw. überwiegend wässrige Systeme wesentlich erleichtert wird.

Die gebrauchsfertigen Zubereitungen der erfindungsgemäßen Verdickungsmittel stellen besonders bevorzugt wässrige Lösungen oder Dispersionen mit einem Feststoffgehalt von 10 bis 80, vorzugsweise 20 bis 60 und besonders bevorzugt 25 bis 50 Gew.-% dar.

Die Menge an erfindungsgemäßen Verdickungsmitteln, die den wässrigen bzw. überwiegend wässrigen Systemen zum Erreichen der gewünschten Verdickung zugesetzt wird, hängt vom jeweiligen Verwendungszweck ab und kann vom Fachmann in wenigen Versuchen ermittelt werden. In der Regel werden 0,05 bis 10 Gew.-%, bevorzugt 0,1 bis 4 Gew.-%, besonders bevorzugt 0,1 bis 2 Gew.-% des erfindungsgemäßen Verdickungsmittels eingesetzt, wobei sich diese Prozentangaben auf das fertig formulierte, erfindungsgemäße Verdickungsmittel in der Lieferform beziehen.

Die Beurteilung der Wirksamkeit der erfindungsgemäßen Verdickungsmittel kann nach bekannten Methoden erfolgen, z.B. im Haake-Rotationsviskosimeter, im Stormer- oder Brookfield-Viskosimeter.

### Beispiele

Abkürzungen:
DBTL: Dibutylzinn-IV-dilaurat
Borchi® Kat 24: Bismut-III-octoat
Borchi® Kat 28: Zinn-II-octoat

### Eingesetzte Rohstoffe

### Polyetherpolyol A:

I Polyether auf Basis Glycerin und Ethylenoxid mit einer OH-Zahl von 16,3 mg KOH/g
Ia Polyether auf Basis Glycerin und Ethylenoxid/Propylenoxid mit einer OH-Zahl von 16,8 mg KOH/g
II Polyether auf Basis Ethylenglykol und Ethylenoxid mit einer OH-Zahl von 9,4 mg KOH/g
III Polyether auf Basis Ethylenglykol und Ethylenoxid mit einer OH-Zahl von 14,0 mg KOH/g
IV Polyether auf Basis Ethylenglykol und Ethylenoxid mit einer OH-Zahl von 28,0 mg KOH/g
V Polyester auf Basis Pentaerythrit mit einer OH-Zahl von 18,7 mg KOH/g

### Herstellung der erfindungsgemäßen Polyurethane

### Beispiel 1

180 g Polyether II wurden unter Stickstoff in einem 1-1-Glaskolben eingewogen und über 1,5-2 Stunden bei 110-115°C durch Einleiten eines Stickstoffstroms von Wasserspuren befreit. Man lässt auf 90°C abkühlen, versetzt mit 10,58 g ethoxyliertem Oleyl-Cetyl Alkohol (OH-Zahl: 165 mg KOH/g), und entwässert für eine weitere halbe Stunde unter Stickstoffstrom. Anschließend versetzt man bei 90-95°C mit 0,24 g Borchi® Kat 24 (BORCHERS GmbH) und 7,50 g Desmodur® 44 MC (Bayer AG). Es wird bei 90 - 95°C so lange gerührt, bis IR-spektroskopisch keine Isocyanatbande mehr nachzuweisen ist. Es resultierte ein hochviskoses, schwach gelblich gefärbtes Polyurethanharz.

### Beispiel 2

150 g Polyether IV wurden unter Stickstoff in einem 1-1-Glaskolben eingewogen und über 1,5-2 Stunden bei 110-115°C durch Einleiten eines Stickstoffstroms von Wasserspuren befreit. Man lässt auf 90°C abkühlen, versetzt mit 13,51 g ethoxyliertem Oleyl-Cetyl Alkohol (OH-Zahl: 154,2 mg KOH/g), und entwässert für eine weitere halbe Stunde unter Stickstoffstrom. Anschließend versetzt man bei 90-95°C mit 0,27 g Borchi® Kat 24 (BORCHERS GmbH) und 14,74 g Desmodur® W/1 (Bayer AG). Es wird bei 90 - 95°C so lange gerührt, bis IR-spektroskopisch keine Isocyanatbande mehr nachzuweisen ist. Es resultierte ein hochviskoses, schwach gelblich gefärbtes Polyurethanharz.

### Beispiel 3

150 g Polyether I wurden unter Stickstoff in einem I-1-Glaskolben eingewogen und über 1,5-2 Stunden bei 110-115°C durch Einleiten eines Stickstoffstroms von Wasserspuren befreit. Man lässt auf 90°C abkühlen, versetzt mit 19,85 g ethoxyliertem Oleyl-Cetyl Alkohol (OH-Zahl: 165 mg KOH/g), und entwässert für eine weitere halbe Stunde unter Stickstoffstrom. Anschließend versetzt man bei 90-95°C mit 0,25 g Borchi® Kat 24 (BORCHERS GmbH) und 8,99 g Desmodur® I (Bayer AG). Es wird bei 90 - 95°C so lange gerührt, bis IR-spektroskopisch keine Isocyanatbande mehr nachzuweisen ist. Es resultierte ein hochviskoses, schwach gelblich gefärbtes Polyurethanharz.

### Beispiel 4

150 g Polyether III wurden unter Stickstoff in einem 1-1-Glaskolben eingewogen und über 1,5-2 Stunden bei 110-115°C durch Einleiten eines Stickstoffstroms von Wasserspuren befreit. Man lässt auf 90°C abkühlen, versetzt mit 13,23 g ethoxyliertem Oleyl-Cetyl Alkohol (OH-Zahl: 165 mg KOH/g), und entwässert für eine weitere halbe Stunde unter Stickstoffstrom. Anschließend versetzt man bei 90-95°C mit 0,25 g Borchi® Kat 24 (BORCHERS GmbH) und 9,83 g Desmodur® W/1 (Bayer AG). Es wird bei 90 - 95°C so lange gerührt, bis IR-spektroskopisch keine Isocyanatbande mehr nachzuweisen ist. Es resultierte ein hochviskoses, schwach gelblich gefärbtes Polyurethanharz.

### Beispiel 5

150 g Polyether III wurden unter Stickstoff in einem 1-1-Glaskolben eingewogen und über 1,5-2 Stunden bei 110-115°C durch Einleiten eines Stickstoffstroms von Wasserspuren befreit. Man lässt auf 90°C abkühlen, versetzt mit 10,07 g ethoxyliertem Oleyl-Cetyl Alkohol (OH-Zahl: 210 mg KOH/g), und entwässert für eine weitere halbe Stunde unter Stickstoffstrom. Anschließend versetzt man bei 90-95°C mit 0,25 g Borchi® Kat 24 (BORCHERS GmbH) und 9,83 g Desmodur® W/1 (Bayer AG). Es wird bei 90 - 95°C so lange gerührt, bis IR-spektroskopisch keine Isocyanatbande mehr nachzuweisen ist. Es resultierte ein hochviskoses, schwach gelblich gefärbtes Polyurethanharz.

### Beispiel 6

150 g Polyether 1 wurden unter Stickstoff in einem 1-I-Glaskolben eingewogen und über 1,5-2 Stunden bei 110-115°C durch Einleiten eines Stickstoffstroms von Wasserspuren befreit. Man lässt auf 90°C abkühlen, versetzt mit 15,01 g ethoxyliertem Oleyl-Cetyl Alkohol (OH-Zahl: 210 mg KOH/g), und entwässert für eine weitere halbe Stunde unter Stickstoffstrom. Anschließend versetzt man bei 90-95°C mit 0,25 g Borchi® Kat 24 (BORCHERS GmbH) und 8,99 g Desmodur® I (Bayer AG). Es wird bei 90 - 95°C so lange gerührt, bis IR-spektroskopisch keine Isocyanatbande mehr nachzuweisen ist. Es resultierte ein hochviskoses, schwach gelblich gefärbtes Polyurethanharz.

### Beispiel 7

150 g Polyether I wurden unter Stickstoff in einem 1-1-Glaskolben eingewogen und über 1,5-2 Stunden bei 110-115°C durch Einleiten eines Stickstoffstroms von Wasserspuren befreit. Man lässt auf 90°C abkühlen, versetzt mit 20,27 g ethoxyliertem Oleyl-Cetyl Alkohol (OH-Zahl: 154,2 mg KOH/g), und entwässert für eine weitere halbe Stunde unter Stickstoffstrom. Anschließend versetzt man bei 90-95°C mit 0,25 g Borchi® Kat 24 (BORCHERS GmbH) und 8,99 g Desmodur® I (Bayer AG). Es wird bei 90 - 95°C so lange gerührt, bis IR-spektroskopisch keine Isocyanatbande mehr nachzuweisen ist. Es resultierte ein hochviskoses, schwach gelblich gefärbtes Polyurethanharz.

### Beispiel 8

150 g Polyether III wurden unter Stickstoff in einem 1-1-Glaskolben eingewogen und über 1,5-2 Stunden bei 110-115°C durch Einleiten eines Stickstoffstroms von Wasserspuren befreit. Man lässt auf 90°C abkühlen, versetzt mit 13,51 g ethoxyliertem Oleyl-Cetyl Alkohol (OH-Zahl: 154,2 mg KOH/g), und entwässert für eine weitere halbe Stunde unter Stickstoffstrom. Anschließend versetzt man bei 90-95°C mit 0,25 g Borchi® Kat 24 (BORCHERS GmbH) und 9,83 g Desmodur® W/1 (Bayer AG). Es wird bei 90 - 95°C so lange gerührt, bis IR-spektroskopisch keine Isocyanatbande mehr nachzuweisen ist. Es resultierte ein hochviskoses, schwach gelblich gefärbtes Polyurethanharz.

### Beispiel 9

300 g Polyether III wurden unter Stickstoff in einem 1-1-Glaskolben eingewogen und über 1,5-2 Stunden bei 110-115°C durch Einleiten eines Stickstoffstroms von Wasserspuren befreit. Man lässt auf 90°C abkühlen, versetzt mit 13,51 g ethoxyliertem Oleyl-Cetyl Alkohol (OH-Zahl: 154,2 mg KOH/g), und entwässert für eine weitere halbe Stunde unter Stickstoffstrom. Anschließend versetzt man bei 90-95°C mit 0,25 g Borchi® Kat 24 (BORCHERS GmbH) und 14,74 g Desmodur® W/1 (Bayer AG). Es wird bei 90 - 95°C so lange gerührt, bis IR-spektroskopisch keine Isocyanatbande mehr nachzuweisen ist. Es resultierte ein hochviskoses, schwach gelblich gefärbtes Polyurethanharz.

### Beispiel 10

200 g Polyether I wurden unter Stickstoff in einem 1-1-Glaskolben eingewogen und über 1,5 - 2 Stunden bei 110-115°C durch Einleiten eines Stickstoffstroms von Wasserspuren befreit. Man lässt auf 90°C abkühlen, versetzt mit 46,57 g Arylpolyglycolether (OH-Zahl: 102 mg KOH/g) und entwässert für eine weitere halbe Stunde unter Stickstoffstrom.

Anschließend versetzt man bei 90-95°C mit 0,24 g Borchi® Kat 28 (Borchers GmbH) und 15,97 g Desmodur® W/1 (Bayer AG). Es wird bei 90-95°C so lange gerührt, bis IR-spektroskopisch keine Isocyanatbande mehr nachzuweisen ist. Es resultiert ein hochviskoses, schwach gelblich gefärbtes Polyurethanharz.

### Beispiel 11

180 g Polyether Ia wurden unter Stickstoff in einem 1-1-Glaskolben eingewogen und über 1,5 - 2 Stunden bei 110-115°C durch Einleiten eines Stickstoffstroms von Wasserspuren befreit. Man lässt auf 90°C abkühlen, versetzt mit 20,83 g Oleyl-Cetyl Alkohol (OH-Zahl: 181,50 mg KOH/g) und entwässert für eine weitere halbe Stunde unter Stickstoffstrom.

Anschließend versetzt man bei 90-95°C mit 0,20 g Borchi® Kat 28 (Borchers GmbH) und 15,97 g Desmodur® I (Bayer AG). Es wird bei 90-95°C so lange gerührt, bis IR-spektroskopisch keine Isocyanatbande mehr nachzuweisen ist. Es resultiert ein hochviskoses, schwach gelblich gefärbtes Polyurethanharz.

### Beispiel 12

200 g Polyether V wurden unter Stickstoff in einem 1-1-Glaskolben eingewogen und über 1,5-2 Stunden bei 110-115°C durch Einleiten eines Stickstoffstroms von Wasserspuren befreit. Man lässt auf 90°C abkühlen, versetzt mit 12,01 g Oleyl-Cetyl Alkohol (OH-Zahl: 181,50 mg KOH/g) und entwässert für eine weitere halbe Stunde unter Stickstoffstrom. Anschließend versetzt man bei 90-95°C mit 0,24 g Borchi® Kat 28 (Borchers GmbH) und 7,77g Desmodur® 1 (Bayer AG). Es wird bei 90-95°C so lange gerührt, bis IR-spektroskopisch keine Isocyanatbande mehr nachzuweisen ist. Es resultiert ein hochviskoses, schwach gelblich gefärbtes Polyurethanharz.

Die in den Beispielen 1 bis 12 hergestellten Polyurethanverdicker wurden zu Lösungen in Wasser mit Glykolen bzw. Emulgatoren verarbeitet, z. B. wie in nachstehender Tabelle 1 stellvertretend aufgeführt.

**Tabelle 1:**

| | | | |
|---|---|---|---|
| **Formulierungsbeispiele der erfindungsgemäßen Polyurethane** | | | |
| Bsp. 13 | PU aus Beispiel 3: 25% | Butyldiglykol 16% | Wasser 59 % |
| | | Fettalkoholalkoxylat*) | |
| Bsp. 14 | PU aus Beispiel 3: 25% | 10% | Wasser 65 % |
| | | Fettalkoholalkoxylat*) | |
| Bsp. 15 | PU aus Beispiel 7: 25% | 10% | Wasser 65 % |
| Bsp. 16 | PU aus Beispiel 8: 20% | Butylglykol 12% | Wasser 68 % |
| | | Fettalkoholalkoxylat*) | |
| Bsp. 17 | PU aus Beispiel 10: 25 % | 10% | Wasser 65 % |
| | | Fettalkoholalkoxylat*) | |
| Bsp. 18 | PU aus Beispiel 11: 25 % | 10% | Wasser 65 % |
| | | Fettalkoholalkoxylat*) | |
| Bsp. 19 | PU aus Beispiel 12: 25 % | 10% | Wasser 65 % |

| | | | |
|---|---|---|---|
| *) Borchers GmbH | | | |

Die Prozentangaben beziehen sich jeweils auf Gewichtsprozente

### Anwendunasbeispiele

Die nachfolgenden Beispiele zeigen, dass mit den erfindungsgemäßen Verdickungsmitteln wässrige Farben und Lacke im Vergleich zu entsprechenden Wettbewerbsprodukten weitaus effizienter verdickt werden können.

Herstellung eines Modell-Lackes und Prüfung der Verdickungswirkung durch Viskositätsmessung:

### Modell-Lack

70,00 g Acrylat (Bayhydrol XP 2470)
28,00 g demin. Wasser
2,00 g Butylglykol
0,05 g Byk 038 (Entschäumer)
100,05 g

Die Verdickerzubereitungen gemäß Tabelle 1 sowie die nachfolgend in Tabelle 2 aufgeführten Verdicker wurden mit jeweils 0,5% Aktivgehalt (Polymeranteil) in 100 g des oben beschriebenen Modell-Lackes mit Hilfe eines Laborrührwerks eingerührt. Nach einer Reifezeit von ca. 12 Std. wurden die Viskositätsmessungen im Low-Shear-Bereich bei 1,0 s⁻¹, 10,3 s⁻¹ sowie 100 s⁻¹ mittels eines Haake-Rheometers RS 1 (Messkörper: Kegel-Platte) durchgeführt bei 23°C.

Die erhaltenen Prüfergebnisse bezüglich der Verdickungswirkung sind in der nachfolgenden Tabelle 2 aufgeführt.

**Tabelle 2: Verdickungswirkung von Polyurethanverdickern, charakterisiert durch die erzielte Lackviskosität**

| **Modell-Lack; Zugabe von 0,5% PU-Verdicker (bezogen auf den Aktivgehalt)** | | | |
|---|---|---|---|
| **Viskosität in mPas bei:** | **1 [s-1]** | **10[s-1]** | **100[s-1]** |
| Bsp. 13 | 4.985 | 4.373 | 2.091 |
| Bsp. 14 | 7.124 | 5.819 | 2.233 |
| Bsp. 15 | 3.976 | 3.594 | 1.572 |
| Bsp. 16 | 2.142 | 2.018 | 920 |
| Bsp. 17 | 7.250 | 3.780 | 1.830 |
| Bsp. 18 | 7.100 | 4.950 | 1.920 |
| Bsp. 19 | 3.870 | 3.250 | 1.610 |
| Rheolate® 288 (Elementis) *) | 1.346 | 1.307 | 856 |
| Tafigel® PUR 61 (Münzing Chemie GmbH) *) | 1.610 | 1.572 | 909 |
| Acrysol® RM 8 W (Rohm & Haas Corp.) *) | 459 | 448 | 386 |
| Acrysol® RM 825 ((Rohm & Haas Corp.) *) | 671 | 652 | 551 |

| | | | |
|---|---|---|---|
| *) PU-Verdicker ohne einen Monoalkohol mit einer Kohlenstoff-Kohlenstoff-Doppelbindung | | | |

### Fazit

Die Ergebnisse der Viskositätsmessungen zeigen deutlich die verbesserte Verdickungswirkung der erfindungsgemäßen Verdickungsmittel im Vergleich zu kommerziell verfügbaren Produkten.

## Patentansprüche

1. Wasserlösliche oder -dispergierbare Polyurethane hergestellt in ein- oder mehrstufig durchgeführter chemischer Reaktion, unter Einhaltung eines NCO/OH-Äquivalentverhältnisses von 0,5 : 1 bis 1,2 : 1, als Umsetzungsprodukt aus
A) mindestens einem Polyetherpolyol der mittleren Funktionalität ≥ 1,2,
B) mindestens einem (cyclo)aliphatischen und/oder aromatischen Diisocyanat,
C) mindestens einem linearen oder verzweigten, (cyclo)aliphatischen Monoalkohol mit 6 bis 34 Kohlenstoffatomen, der mindestens ein ungesättigtes Strukturelement (Kohlenstoff-Kohlenstoff Doppelbindung) als integralen Bestandteil aufweist oder mindestens einem linearen oder verzweigten, (cyclo)aliphatischen Monoalkoholalkoxylat mit 6 bis 34 Kohlenstoffatomen, das mindestens ein ungesättigtes Strukturelement (Kohlenstoff-Kohlenstoff Doppelbindung) als Bestandteil aufweist und das um mindestens eine Ethylenoxid (EO)- oder Propylenoxid (PO)-Einheit verlängert wurde oder aromatische Monoalkohole und/oder aromatische Monoalkoholalkoxylate mit 6 bis 34 Kohlenstoffatomen, oder Mischungen dieser Komponenten,
D) gegebenenfalls einer weiteren linearen oder verzweigten monofunktionellen Komponente mit einem Kohlenstoffrest von 6 bis 34 Kohlenstoffatomen., die mit Isocyanaten reagieren kann und die vorzugsweise aus einem (cyclo)aliphatischen und/oder aromatischen Monoalkohol, einem (cyclo)aliphatischen und/oder aromatischen Monoalkoholalkoxylat oder einem (cyclo)aliphatischen und/oder aromatischen Amin besteht.

2. Polyurethane gemäß Anspruch 1, **dadurch gekennzeichnet, dass** das Polyetherpolyol
A) eine mittlere Funktionalität von gleich oder größer 2 hat.

3. Polyurethane gemäß Anspruch 1, **dadurch gekennzeichnet, dass** das Polyetherpolyol
A) eine mittlere Funktionalität von 3 bis 4 hat.

4. Polyurethane gemäß Anspruch 1, **dadurch gekennzeichnet, dass** das Diisocyanat B) ein (cyclo)aliphatisches Diisocyanat ist.

5. Polyurethane gemäß Anspruch 1, **dadurch gekennzeichnet, dass** die Komponente C) 10 bis 22 Kohlenstoffatome hat.

6. Polyurethane gemäß Anspruch 1, **dadurch gekennzeichnet, dass** die Komponente C) durch Umsetzung mit 1-3 mol Alkylenoxid, besonders bevorzugt Ethylenoxid, kettenverlängert wurde.

7. Polyurethane gemäß Anspruch 1, **dadurch gekennzeichnet, dass** die Komponente C) durch Umsetzung mit mehr als 3 mol Alkylenoxid, besonders bevorzugt Ethylenoxid, kettenverlängert wurde.

8. Polyurethane gemäß Anspruch 1, **dadurch gekennzeichnet, dass** die Komponente C) zwei oder mehr Doppelbindungen enthält.

9. Polyurethane gemäß Anspruch 1, **dadurch gekennzeichnet, dass** die optionale Komponente D) aus einem linearen oder verzweigten Monoalkohol mit 8 bis 18 Kohlenstoffatomen besteht.

10. Polyurethane gemäß Anspruch 1, **dadurch gekennzeichnet, dass** die optionale Komponente D) aus einem linearen oder verzweigten aliphatischen Amin mit 8 bis 18 Kohlenstoffatomen besteht

11. Verfahren zur Herstellung wasserlöslicher oder wasserdispergierbarer Polyurethane gemäß Anspruch 1, **dadurch gekennzeichnet, dass** unter Einhaltung eines NCO/OH-Äquivalentverhältnisses von 0,5 : 1 bis 1,2 : 1 in ein- oder mehrstufiger chemischen Reaktion unter Verwendung von
A) mindestens einem Polyetherpolyol der mittleren Funktionalität ≥ 1,2,
B) mindestens einem (cyclo)aliphatischen und/oder aromatischen Diisocyanat,
C) mindestens einem linearen oder verzweigten, (cyclo)aliphatischen Monoalkohol mit 6 bis 34 Kohlenstoffatomen, der mindestens ein ungesättigtes Strukturelement (Kohlenstoff-Kohlenstoff Doppelbindung) als integralen Bestandteil aufweist oder mindestens einem linearen oder verzweigten, (cyclo)aliphatischen Monoalkoholalkoxylat mit 6 bis 34 Kohlenstoffatomen, das mindestens ein ungesättigtes Strukturelement (Kohlenstoff-Kohlenstoff Doppelbindung) als integralen Bestandteil aufweist und das um mindestens eine Ethylenoxid (EO)- oder Propylenoxid (PO)-Einheit verlängert wurde oder aromatische Monoalkohole und/oder aromatische Monoalkoholalkoxylate mit 6 bis 34 Kohlenstoffatomen, oder Mischungen dieser Komponenten,
D) gegebenenfalls einer weiteren linearen oder verzweigten monofunktionellen Komponente mit einem Kohlenstoffrest von 6 bis 34 Kohlenstoffatomen., die mit Isocyanaten reagieren kann und die vorzugsweise aus einem (cyclo)aliphatischen und/oder aromatischen Monoalkohol, einem (cyclo)aliphatischen und/oder aromatischen Monoalkoholalkoxylat oder einem (cyclo)aliphatischen und/oder aromatischen Amin besteht
miteinander umgesetzt werden.

12. Verwendung der Polyurethane gemäß den Ansprüchen 1 bis 11 zur Verdickung von wässrigen Lacksystemen, Klebstoffen und anderen wässrigen Formulierungen.

13. Wässrige oder überwiegend wässrige Systeme enthaltend wenigstens ein Polyurethan gemäß Anspruch 1.

14. Verfahren zur Herstellung von verdickten wässrigen Systemen gemäß Anspruch 13, insbesondere Lacksystemen, Klebstoffen und anderen wässrigen Formulierungen durch Vorlage der entsprechenden Formulierung, Zugabe eines Polyurethans gemäß Anspruch 1, Vermischen und Reifung der Komponenten.
